(19) Europäisches Patentamt
European Patent Office
Office européen des brevets

(11) EP 2 051 424 A1

(12) EUROPEAN PATENT APPLICATION
published in accordance with Art. 153(4) EPC

(43) Date of publication:
22.04.2009 Bulletin 2009/17

(51) Int Cl.:
*H04J 11/00* (2006.01)  *H04B 1/707* (2006.01)

(21) Application number: 06782663.6

(22) Date of filing: 10.08.2006

(86) International application number:
PCT/JP2006/315877

(87) International publication number:
WO 2008/018145 (14.02.2008 Gazette 2008/07)

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK RS

(71) Applicant: Panasonic Corporation
Kadoma-shi
Osaka 571-8501 (JP)

(72) Inventor: SEKI, Yuta
c/o Panasonic Corporation IPROC
Osaka 540-6207 (JP)

(74) Representative: Grünecker, Kinkeldey,
Stockmair & Schwanhäusser
Anwaltssozietät
Leopoldstrasse 4
80802 München (DE)

(54) **OFDM TRANSMITTER APPARATUS AND OFDM RECEIVER APPARATUS**

(57)  An OFDM transmitter apparatus and an OFDM receiver apparatus wherein the calculation amount of cell search can be reduced and a faster cell search and a reduced circuit scale can be accomplished. A base station apparatus (100), which serves as an OFDM transmitter apparatus, comprises an SCH inserting part (130) that serves as a frame forming means for forming a frame in which synchronous sequences are arranged such that symbols located symmetrically about a subcarrier of a DC component are complex conjugates; and an IFFT part (135) that servers as an OFDM modulation means for OFDM modulating the formed frame. Thus, at a mobile station apparatus (200), which receives the frame, only a real number signal can be used as an SCH replica signal to perform a correlation processing, so that the calculation amount can be reduced and a faster cell search can be accomplished.; In addition, because of the reduced calculation amount, the circuit scale at the receiving end can be reduced.

FIG.1

**Description**

Technical Field

The present invention relates to an OFDM transmitting apparatus and an OFDM receiving apparatus. More particularly, the present invention relates to an OFDM transmitting apparatus transmitting synchronized sequences and an OFDM receiving apparatus receiving the synchronized sequences and performs synchronization control.

Background Art

In the standards organization 3GPP (3rd Generation Partnership Project), studies are conducted for 3GPP LTE (Long Term Evolution) to realize further improvement of present third mobile phone systems. The standardization meeting in November, 2004, approves requirement conditions for LTE systems (see Non-Patent document 1), and the OFDM scheme is likely to be adopted as a downlink radio transmission scheme to meet these requirements.

In cellular systems such as mobile phone systems, cell search technique, which mobile stations search for the optimal base station to connect the radio link upon starting communication, upon handover, upon waiting communication for carrying out intermittent reception, and so on, is one of significant functions. The standardization meeting proposes study of cell search in LTE systems (see Non-Patent Document 2).

Non-Patent Document 2 discloses conducting cell search in the following three steps. In the first stage, correlation detection is performed with respect to the first synchronized sequences (P-SCH: Primary Synchronization Channel) in the time domain. This detects the OFDM symbol timing and subframe timing.

In the second stage, the correlation detection is performed with respect to the second synchronized sequences (S-SCH: Secondary Synchronization Channel) in the frequency domain. This detects, for example, cell ID groups, radio frame timings, cell structures, MIMO antenna structures and BCH bandwidth.

In the third step, correlation detection is performed with respect to the common pilot channels in the frequency domain. To be more specific, correlations between replicas of common pilot signals and received signals after FFT are detected. This detects cell IDs belonging to cell ID groups detected in the second step (that is, identifies cell-specific scramble codes) and identifies the sector numbers.

As described above, by detecting correlation between replica signals of synchronization channel (SCH) held in receiving apparatuses and received signals, timings can be detected.

Non-patent Document 1 : 3GPP, TR25.913v7.0.0(2005-06), "Requirements for Evolved UTRA and UTRAN"
Non-patent Document 2: 3GPP, R1-060780, NTT DoCoMo, NEC, "SCH Structure and Cell Search Method for E-UTRA Downlink"

Disclosure of Invention

Problems to be Solved by the Invention

Incidentally, to start communication earlier, demanded is high speed cell search. Further, if the amount of calculation can be reduced to realize high speed cell search, it is possible to reduce circuit scale and power consumption of communication apparatuses.

The present invention is made in view of the above-described problems, and it is therefore an object of the present invention to provide an OFDM transmitting apparatus and OFDM receiving apparatus that reduces the amount of calculation of cell search and realizes high speed cell search and reduced circuit scales.

Means for Solving the Problem

The OFDM transmitting apparatus of the present invention adopts a configuration including: a synchronization sequence forming section that forms a synchronized sequence with a real number alone or with an imaginary number alone; and an OFDM signal forming section that forms an OFDM transmitting signal including the synchronized sequence.

The OFDM receiving apparatus of the present invention adopts a configuration including: a receiving section that receives an OFDM signal including a synchronized sequence formed with a real number alone or with an imaginary number alone; and a timing detecting section that detects correlation using a synchronized sequence replica formed with the real number alone or with the imaginary number alone.

Advantageous Effect of the Invention

According to the present invention, it is possible to provide an OFDM transmitting apparatus and OFDM receiving apparatus that reduces the amount of calculation of cell search and realizes high speed cell search and reduced circuit scales.

Brief Description of Drawings

FIG.1 is a block diagram showing the configuration of the base station apparatus according to Embodiment 1 of the present invention;

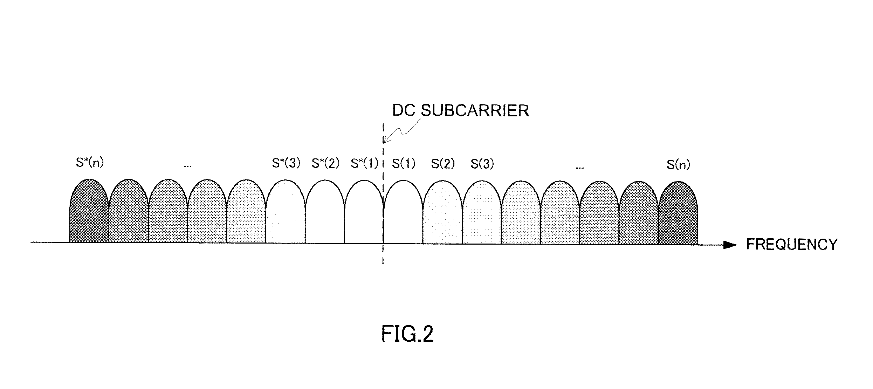

FIG.2 explains the SCH sequences the base station of FIG.1 transmits;
FIG.3 is a block diagram showing the configuration of the mobile station apparatus according to Embodiment 1 of the present invention;
FIG.4 explains the SCH sequences the base station in Embodiment 2 transmits;
FIG.5 is a block diagram showing the configuration of the base station apparatus according to other embodiments; and
FIG.6 is a block diagram showing the configuration of the mobile station apparatus according to other embodiments.

Best Mode for Carrying Out the Invention

Now, embodiments of the present invention will be described in detail with reference to the accompanying drawings. In the embodiments, the same reference numerals are assigned the same components, and therefore the overlapping descriptions will be omitted.

(Embodiment 1)

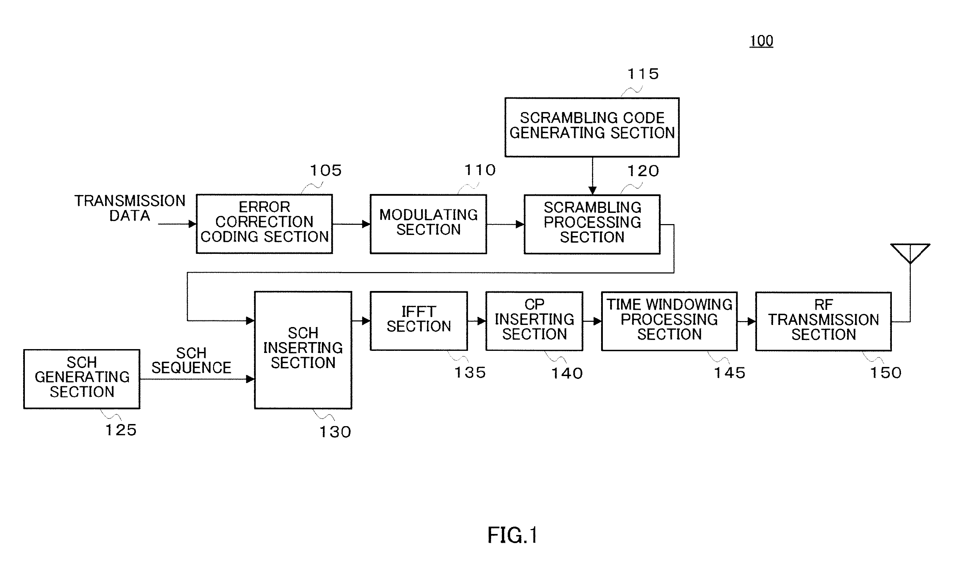

The radio communication system in Embodiment 1 has a base station apparatus and a mobile station apparatus. Referring to FIG.1, base station apparatus 100 of Embodiment 1 has error correction coding section 105, modulating section 110, scrambling code generating section 115, scrambling processing section 120, SCH generating section 125, SCH inserting section 130, IFFT section 135, CP inserting section 140, time windowing ("TW") processing section 145 and RF transmitting section 150.
Error correction coding section 105 performs predetermined coding on transmission data, which is an input signal, and outputs the coded transmission data to modulating section 110.
Modulating section 110 performs predetermined primary modulation on the signal after coding processing, which is an input signal, and outputs the modulated signal to scrambling processing section 120.
Scrambling code generating section 115 generates a scrambling code according to the ID that is specific to the cell of the base station apparatus, and outputs the scrambling code to scrambling processing section 120.
Scrambling processing section 120 performs scrambling by multiplying the modulated signal, which is an input signal, by the scramble code, and outputs the scrambled signal to SCH inserting section 130.
SCH generating section 125 generates an SCH sequence formed with pairs of symbols, which are complex conjugates of each other, and outputs the SCH sequence to SCH inserting section 130.
SCH inserting section 130 maps the SCH sequence generated in SCH generating section 125 to a frame in the frequency domain (i.e. to an OFDM symbol). To be more specific, SCH inserting section 130 maps the SCH sequence in a frame in the frequency domain so that subcarrier symbols in symmetric positions with respect to the subcarrier of the DC component (hereinafter "DC subcarrier") are complex conjugates of each other. Now, this configuration in which subcarrier symbols in symmetric positions with respect to the DC subcarrier are complex conjugates of each other will be hereinafter referred to as being "complex conjugate symmetric" in the present description. In other OFDM symbols, the signal scrambled in scrambling processing section 120 is mapped.
IFFT section 135 performs an inverse fast Fourier transform of the input signal and converts the frequency domain signal into a time domain signal, to generate an OFDM signal, and outputs the OFDM signal to CP inserting section 140. At this time, the SCH sequence inserted in SCH inserting section 130 is "complex conjugate symmetric," so that, upon the inverse fast Fourier transform in IFFT section 135, only the real number part of the SCH sequence remains and gives a real number signal.
CP inserting section 140 maps a copy of the tail part of the inputted OFDM symbol to the beginning of that OFDM symbol, that is, inserts a cyclic prefix ("CP").
TW processing section 145 filters the OFDM signal for maintaining the continuity of the waveform of the OFDM signal after inserting a CP, and outputs the OFDM signal after the filtering processing to RF transmitting section 150.

RF transmitting section 150 performs radio processing (e.g. D/A conversion and up-conversion) on the input signal and transmits the input signal subject to radio processing via antenna.

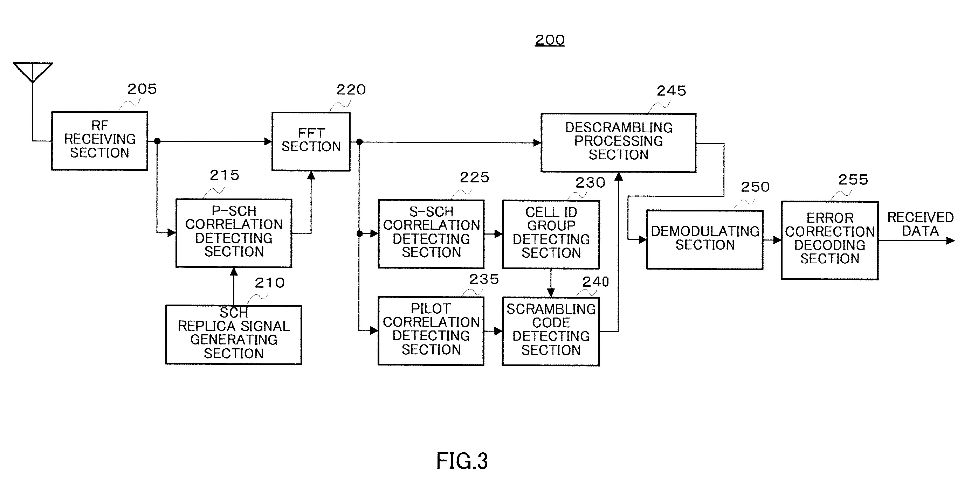

Referring to FIG.3, mobile station apparatus 200 of Embodiment 1 has RF receiving section 205, SCH replica signal generating section 210, P-SCH correlation detecting section 215, FFT section 220, S-SCH correlation detecting section 225, cell ID group detecting section 230, pilot correlation detecting section 235, scrambling code detecting section 240, descrambling processing section 245, demodulating section 250 and error correction decoding section 255.

RF receiving section 205 performs radio receiving processing (e.g. A/D conversion and down-conversion) on a received signal received via the antenna, and outputs the received signal after radio receiving processing to P-SCH correlation detecting section 215 and FFT section 220.

SCH replica signal generating section 210 generates an SCH replica signal, which is a real number signal similar to the output of IFFT section 135 of base station apparatus 100, and outputs the SCH replica signal to P-SCH correlation detecting section 215.

P-SCH correlation detecting section 215 finds the correlation between the SCH replica signal and the received signal and detects the timing a peak occurs (e.g. symbol timing, subframe timing, etc.), and outputs timing information to FFT section 220.

FFT section 220 removes the CP based on the timing information (i.e. symbol timing) inputted from P-SCH correlation detecting section 215. Further, FFT section 220 performs a fast Fourier transform at the timing based on the timing information (i.e. symbol timing), and outputs the signal after the fast Fourier transform to S-SCH correlation detecting section 225, pilot correlation detecting section 235 and descrambling processing section 245.

S-SCH correlation detecting section 225 detects the correlation between the signal after the FFT (i.e. the signal converted in the frequency domain) and an SCH sequence, and output cell ID group detecting section 230.

Based on the correlation result detected in S-SCH correlation detecting section 225, cell ID group detecting section 230 detects the cell ID group and outputs the detected cell ID group information to scrambling code detecting section 240.

Pilot correlation detecting section 235 detects the correlation between the signal after the FFT and the pilot sequence, and outputs the signal after correlation detecting to scrambling code detecting section 240. To the transmission frame transmitted from base station apparatus 100, a pilot sequence, in which a cell specific scrambling code and the OFDM symbol at the predetermined position from the beginning of the frame are multiplied, is mapped. For the reason, the frame timing can be detected by finding the correlation between the signal after FFT processing and the pilot sequence.

Scrambling code detecting section 240 identifies the frame timing from the correlation detection result in pilot correlation detecting section 235, specifies the position of the pilot sequence from this frame timing, and detects the peak by multiplying this pilot sequence by the scramble code included in the cell ID group that the cell ID group information designates, thus identifying the scramble code. This fixed scramble code is outputted to descrambling processing section 245.

Descrambling processing section 245 descrambles the signal after FFT processing using the scramble code detected in scrambling code detecting section 240, and outputs the signal to demodulating section 250.

Demodulating section 250 demodulates the input signal and outputs the demodulated signal to error correction decoding section 255. Error correction decoding section 255 performs predetermined decoding to acquire received data.

Next, the operations of base station apparatus 100 and mobile station apparatus 200 having the above configurations will be explained.

In base station apparatus 100, SCH generating section 125 generates an SCH sequence formed with pairs of symbols, which are complex conjugates of each other, and outputs the SCH sequence to SCH inserting section 130.

SCH inserting section 130 maps the SCH sequence in a frame so that subcarrier symbols in symmetric positions with respect to the DC subcarrier are complex conjugates of each other. That is, in SCH inserting section 130, a frame is formed in which an SCH sequence is mapped such that subcarrier symbols in symmetric positions with respect to the DC subcarrier are complex conjugates of each other.

IFFT section 135 performs an inverse fast Fourier transform of the frame where the SCH sequences are mapped, such that subcarrier symbols in symmetric positions with respect to the DC subcarrier are complex conjugates of each other. As described above, in the OFDM signal after IFFT, only the real number part of the SCH sequence remains.

The OFDM signal is subject to predetermined processing in CP inserting section 140, TW processing section 145 and RF transmitting section 150, and transmitted via antenna.

In mobile station apparatus 200, RF receiving section performs predetermined processing on a received signal received via antenna, and outputs the received signal to P-SCH correlation detecting section 215.

P-SCH correlation detecting section 215 finds correlation between the SCH replica signal and the received signal. Here, regarding received signal, although the SCH sequence includes the real number signal alone was transmitted from base station apparatus 100, phase rotation is produced over the channel, and therefore, upon reception, the received signal includes the imaginary number part as well such as ($I_{RECEIVE} + j \times Q_{RECEIVE}$).

However, the SCH sequence of the received signal is influenced by phase rotation alone, so that P-SCH correlation detecting section 215 can find correlation by using $I_{REPLICA}$ as an SCH replica signal.

That is, for conventional correlation calculation, the following equation is required to calculate.

$$(I_{RECEIVE} + j \times Q_{RECEIVE}) \times (I_{REPLICA} + j \times Q_{REPLICA})*$$

where "*" is the complex conjugate.

By contrast with this, in the mobile station apparatus 200, it is enough to calculate the following equation.

$$(I_{RECEIVE} + j \times Q_{RECEIVE}) \times I_{REPLICA}$$

Consequently, the amount of calculation in mobile station apparatus 200 may be about a half amount of the conventional correlation calculation, so that it is possible to reduce the circuit scales of correlation detection.

In this way, according to the present embodiment, the base station apparatus 100 as an OFDM transmitting apparatus has : SCH inserting section 130 as a frame forming means for forming a frame where synchronized sequences are mapped such that subcarrier symbols in symmetric positions with respect to the DC subcarrier are complex conjugates of each other; and IFFT section 135 as an OFDM modulation means for OFDM modulating the frame.

By this means, in the receiving side of the frame, it is possible to find correlation by using a real number signal ($I_{REPLCA}$) of an SCH replica signal, so that the amount of calculation can be reduced and cell search can be made high speed. Further, the amount of calculation decreases, so that it is possible to reduce the circuit scale at the receiving side.

Further, according to the present embodiment, mobile station apparatus 200 as an OFDM receiving apparatus has: RF receiving section 205 as a receiving means for receiving a frame where synchronized sequences (P-SCHs) are mapped, such that subcarrier symbols in symmetric positions with respect to the DC subcarrier are complex conjugates of each other; and P-SCH correlation detecting section 215 as a timing detection means for detecting correlation using a synchronization sequence replica of a real number signal similar to the result of the synchronized sequence subject to OFDM modulation.

By this means, by receiving the frame where synchronized sequences (P-SCHs) are mapped such that subcarrier symbols in symmetric positions with respect to the DC subcarrier are complex conjugates of each other, the synchronized sequences can be found correlation only by the real number signal, so that the amount of calculation can be reduced and cell search can be made high speed. Further, the amount of calculation decreases, so that it is possible to reduce the circuit scale.

(Embodiment 2)

In Embodiment 1, a frame is formed in which SCH a sequence is mapped such that subcarrier symbols in symmetric positions with respect to the DC subcarrier are complex conjugates of each other, and, in the receiving side of this frame, the real number signal alone of an SCH replica signal is used and correlated with a received signal. By contrast with this, in Embodiment 2, the frame is formed where SCH sequences are mapped such that subcarrier symbols in symmetric positions with respect to the DC subcarrier are complex conjugates of each other and the symbols on one side are furthermore code-inverted to the symbols on the other side.

The configuration of the radio communication system of the present embodiment is the same as in Embodiment 1, and will be explained using FIGs.1 and 3.

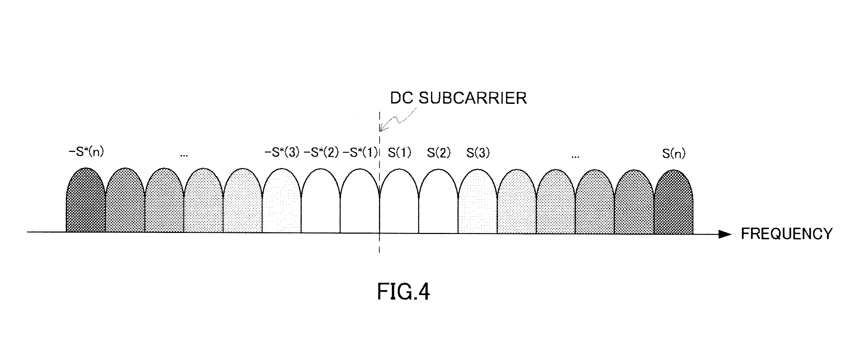

SCH inserting section 130 maps the SCH sequences in a situation where subcarrier symbols in symmetric positions with respect to the DC subcarrier are complex conjugates of each other as shown in FIG. 4, and the symbols on one side are furthermore code-inverted to the symbols on the other side. That is, in SCH inserting section 130, the frame is formed where the SCH sequences are mapped such that subcarrier symbols in symmetric positions with respect to the DC subcarrier are complex conjugates of each other and the symbols on one side are furthermore code-inverted to the symbols on the other side.

For the reason, with Embodiment 2, in the OFDM signal after IFFT by IFFT section 135, only the imaginary number part of the SCH sequence remains.

P-SCH correlation detecting section 215 of the receiving side finds correlation between the SCH replica signal and the received signal. Here, regarding received signal, although the SCH sequence includes the imaginary number signal alone was transmitted from base station apparatus 100, phase rotation is produced over the channel, and therefore, upon reception, the received signal includes the imaginary number part as well such as ($I_{RECEIVE} + j \times Q_{RECEIVE}$). However, the SCH sequence of the received signal is influenced by phase rotation alone, so that P-SCH correlation detecting section 215 can find correlation by using j × $Q_{REPLICA}$) * as an SCH replica signal.

That is, for conventional correlation calculation, the following equation is required to calculate.

$$(I_{RECEIVE} + j \times Q_{RECEIVE}) \times (I_{REPLICA} + j \times Q_{REPLICA})*$$

where "*" is the complex conjugate.

By contrast with this, in the mobile station apparatus 200, it is enough to calculate the following equation.

$$(I_{RECEIVE} + j \times Q_{RECEIVE}) \times (j \times Q_{REPLICA})*$$

Consequently, the amount of calculation in mobile station apparatus 200 may be about a half amount of the conventional correlation calculation, so that it is possible to reduce the circuit scales of correlation detection.

In this way, according to the present embodiment, the base station apparatus 100 as an OFDM transmitting apparatus has: SCH inserting section 130 as a frame forming means for forming a frame where synchronized sequences (P-SCHs) are mapped such that symbols in symmetric positions with respect to a direct current subcarrier are complex conjugates of each other and the symbols on one side are furthermore code-inverted to the symbols on the other side; and IFFT section 135 as an OFDM modulation means for OFDM modulating the frame.

By this means, in the receiving side of the frame, it is possible to find correlation by using an imaginary number signal (($j \times Q_{REPLICA}$)*) of an SCH replica signal, so that the amount of calculation can be reduced and cell search can be made high speed. Further, the amount of calculation decreases, so that it is possible to reduce the circuit scale at the receiving side.

Further, according to the present embodiment, mobile station apparatus 200 as an OFDM receiving apparatus has: RF receiving section 205 as a receiving means for receiving a frame where synchronized sequences are mapped in a situation where symbols in symmetric positions with respect to a direct component subcarrier are complex conjugates of each other and the symbols on one side are furthermore code-inverted to the symbols on the other side; and P-SCH correlation detecting section 215 as a timing detection means for detecting correlation using an imaginary number signal replica similar to the result of the synchronized sequence subject to OFDM modulation.

By this means, mobile station apparatus 200 as an OFDM receiving apparatus receives a frame where synchronized sequences are mapped in a situation where symbols in symmetric positions with respect to a direct current subcarrier are complex conjugates of each other and the symbols on one side are furthermore code-inverted to the symbols on the other side, so that the correlation of the synchronized sequence can be found by the imaginary number signal alone, thereby reducing the amount of calculation and making high speed cell search. Further, the amount of calculation decreases, so that it is possible to reduce the circuit scale.

(Other Embodiments)

(1) When subcarriers are mapped, usual OFDM modulation may be performed without the mapping of Embodiment 1 or 2, and the real number component or pure imaginary number component alone of the OFDM signal may be transmitted. At this time, only one of the real number component and the pure imaginary number component is transmitted, so that it is necessary to double the transmission power to compensate for power loss. This also results in the same signal as in Embodiments 1 and 2 (complex conjugate symmetric mapping or complex conjugate symmetric and code-inversion mapping).

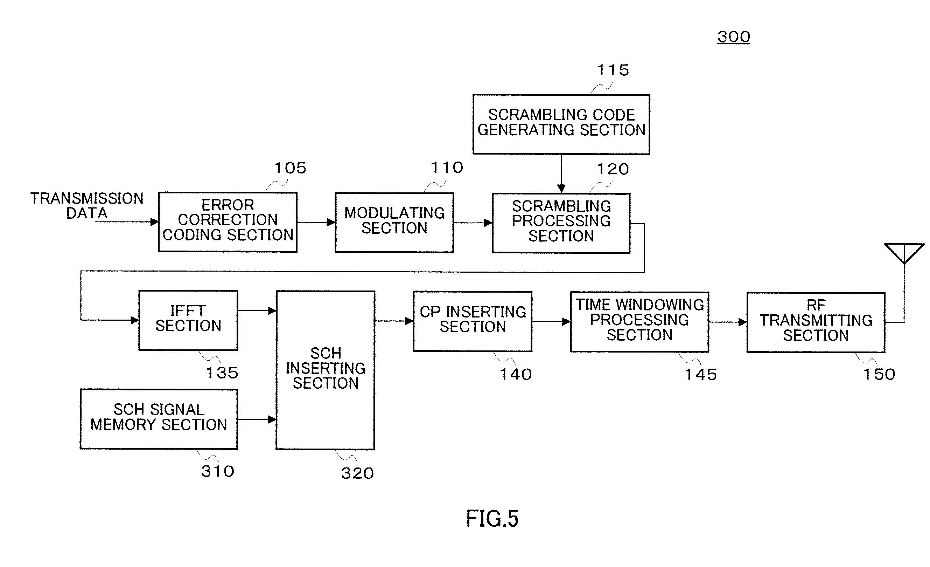

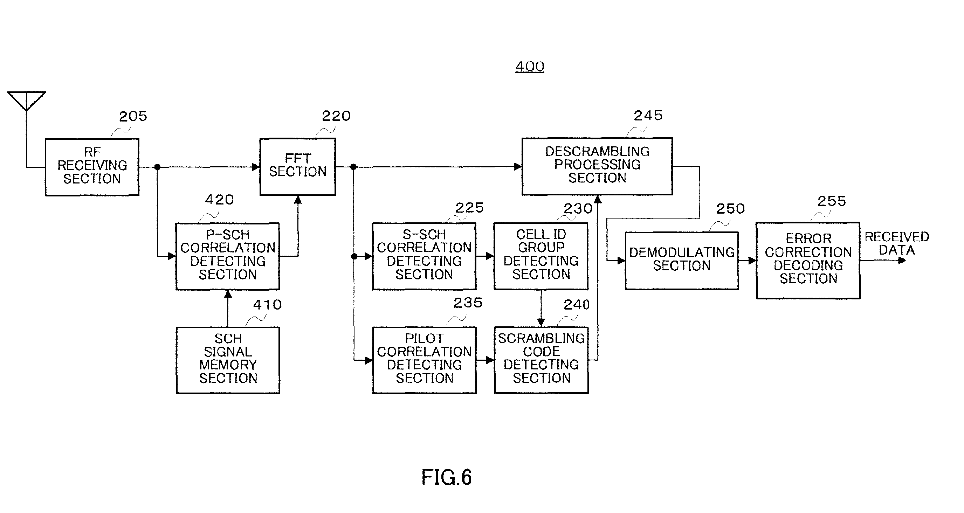

(2) A known signal sequence between the base station apparatus and the mobile station apparatus is used for the SCH sequence, and so, it is not necessary to perform OFDM modulating processing in Embodiments 1, 2 and other embodiment (1), and the SCH signal can be held in a memory and transmitted or can be inputted to correlation detecting processing. FIGs.5 and 6 show the configurations of the base station apparatus and the mobile station apparatus in this case.

As shown in Fig.5, base station apparatus 300 has SCH signal memory section 310 and SCH inserting section 320.

SCH signal memory section 310 stores the real number signal of the SCH sequence after IFFT in Embodiment 1 and the imaginary number signal of the SCH sequence after IFFT in Embodiment 2.

SCH inserting section 320, which is different from SCH inserting section 130 in Embodiment 1, is provided after IFFT section 135. SCH inserting section 320 combines the signal after the IFFT and the SCH sequence from SCH signal memory section 310, and outputs the combined signal to CP inserting section 140.

Referring to FIG.6, mobile station apparatus 400 has SCH signal memory section 410 and P-SCH correlation detecting section 420.

SCH signal memory section 410 stores the same signal as SCH signal memory section 310 at the transmitting side.

P-SCH correlation detecting section 420 finds the correlation between the SCH replica signal from SCH signal memory section 410 and a received signal, and detects the symbol timing and subframe timing.

Industrial Applicability

The OFDM transmitting apparatus and OFDM receiving apparatus of the present invention are suitable for use in reducing the amount of calculation of cell search, and in realizing high speed cell search and reduced circuit scales.

**Claims**

1. An orthogonal frequency division multiplexing transmitting apparatus comprising:

   a synchronization sequence forming section that forms a synchronized sequence with a real number alone or with an imaginary number alone; and
   an orthogonal frequency division multiplexing signal forming section that forms an orthogonal frequency division multiplexing transmitting signal including the synchronized sequence.

2. An orthogonal frequency division multiplexing receiving apparatus comprising:

   a receiving section that receives an orthogonal frequency division multiplexing signal including a synchronized sequence formed with a real number alone or with an imaginary number alone; and
   a timing detecting section that detects correlation using a synchronized sequence replica formed with the real number alone or with the imaginary number alone.

3. An orthogonal frequency division multiplexing transmitting apparatus comprising:

   a frame forming section that forms a frame in which a synchronized sequence is mapped such that symbols in symmetric positions with respect to a direct current component subcarrier are complex conjugates; and
   an orthogonal frequency division multiplexing modulating section that orthogonal frequency division multiplexing modulates the frame.

4. An orthogonal frequency division multiplexing transmitting apparatus comprising:

   a frame constructing section that constructs a frame to which synchronized sequences are mapped in a situation in which symbols in symmetric positions with respect to a direct component subcarrier are complex conjugates of each other and the symbols on one side are furthermore code-inverted to the symbols on the other side; and
   an orthogonal frequency division multiplexing modulating section that orthogonal frequency division multiplexing modulates the frame.

5. An orthogonal frequency division multiplexing receiving apparatus comprising:

   a receiving section that receives a frame in which a synchronized sequence is mapped such that symbols in symmetric positions with respect to a direct current component subcarrier are complex conjugates; and
   a timing detecting section that detects correlation using a synchronized sequence replica of a real number signal similar to a result of the synchronized sequence subject to orthogonal frequency division multiplexing modulation.

6. An orthogonal frequency division multiplexing receiving apparatus comprising:

   a receiving section that receives a frame to which a synchronized sequence is mapped in a situation in which symbols in symmetric positions with respect to a direct component subcarrier are complex conjugates of each other and the symbols on one side are furthermore code-inverted to the symbols on the other side; and

a timing detecting section that detects correlation using a synchronized sequence replica of an imaginary number signal similar to a result of the synchronized sequence subject to orthogonal frequency division multiplexing modulation.

100

115

SCRAMBLING CODE
GENERATING SECTION

105          110                    120

TRANSMISSION
DATA
→ ERROR
CORRECTION
CODING SECTION
→ MODULATING
SECTION
→ SCRAMBLING
PROCESSING
SECTION

SCH
GENERATING
SECTION

SCH
SEQUENCE
→ SCH
INSERTING
SECTION
→ IFFT
SECTION
→ CP
INSERTING
SECTION
→ TIME WINDOWING
PROCESSING
SECTION
→ RF
TRANSMISSION
SECTION

125          130          135          140          145          150

FIG.1

DC SUBCARRIER

S*(n) ... S*(3) S*(2) S*(1) | S(1) S(2) S(3) ... S(n)

FREQUENCY

FIG.2

FIG.3

DC SUBCARRIER

$-S^*(n)$     ...     $-S^*(3)$ $-S^*(2)$ $-S^*(1)$   $S(1)$    $S(2)$    $S(3)$       ...       $S(n)$

FREQUENCY

FIG.4

FIG.5

EP 2 051 424 A1

FIG.6

## INTERNATIONAL SEARCH REPORT

| International application No. |
| --- |
| PCT/JP2006/315877 |

A. CLASSIFICATION OF SUBJECT MATTER
*H04J11/00(2006.01)i, H04B1/707(2006.01)i*

According to International Patent Classification (IPC) or to both national classification and IPC

B. FIELDS SEARCHED

Minimum documentation searched (classification system followed by classification symbols)
H04J11/00, H04B1/707

Documentation searched other than minimum documentation to the extent that such documents are included in the fields searched
Jitsuyo Shinan Koho        1922-1996    Jitsuyo Shinan Toroku Koho    1996-2006
Kokai Jitsuyo Shinan Koho   1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2000-041019 A (Fumio TAKAHATA), 08 February, 2000 (08.02.00), Fig. 8 & JP 3400719 B2 | 1,4 |
| Y | JP 2004-207983 A (Nippon Terekomu Kabushiki Kaisha), 22 July, 2004 (22.07.04), Figs. 5, 7 (Family: none) | 1-6 |
| Y | JP 2002-009725 A (Victor Company Of Japan, Ltd.), 11 January, 2002 (11.01.02), Figs. 8, 9 & EP 1170918 A1      & US 2002/0003772 A1 | 1-6 |

| ☒ Further documents are listed in the continuation of Box C. | ☐ See patent family annex. |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 02 November, 2006 (02.11.06) | Date of mailing of the international search report 14 November, 2006 (14.11.06) |
| --- | --- |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/315877

C (Continuation).  DOCUMENTS CONSIDERED TO BE RELEVANT

| Category* | Citation of document, with indication, where appropriate, of the relevant passages | Relevant to claim No. |
|---|---|---|
| Y<br>A | JP 2000-261401 A  (NEC Corp.),<br>22 September, 2000 (22.09.00),<br>Figs. 1, 2<br>(Family: none) | 1-3,5<br>4,6 |

Form PCT/ISA/210 (continuation of second sheet) (April 2005)